# DEMANDE DE BREVET EUROPEEN

(11) **EP 4 806 763 A1**
(43) Date de publication de la demande: **16.09.2026**
(21) Numéro de dépôt: 26163750.8
(22) Date de dépôt: 10.03.2026
(51) Int. Cl.: B62D 21/11, B62D 25/08

(54) **AGENCEMENT AVANT POUR VÉHICULE ET VÉHICULE ASSOCIÉ**

(30) Priorité: 11.03.2025 FR 2502407
(71) Demandeur: Flexis, 92100 Boulogne Billancourt (FR)
(72) Inventeur: CAUDRON, Michael, 78640 VILLIERS SAINT-FREDERIC (FR)
(74) Mandataire: Lavoix

(57) **Abrégé**

La présente invention concerne un agencement avant pour véhicule comprenant :
- un berceau comprenant deux longerons, chacun des longerons s'étendant selon une direction longitudinale entre une extrémité avant et une extrémité arrière, les deux longerons étant espacés l'un de l'autre selon une direction transversale,
- un support (30) comprenant une face supérieure (64) et une face inférieure (66) opposées selon une direction verticale (Z) perpendiculaire à la direction longitudinale (X) et à la direction transversale (Y), la face inférieure (66) du support (30) s'étendant en regard du berceau,
- un espace de réception inférieur défini selon la direction verticale (Z) entre la face inférieure (66) du support (30) et le berceau, et
- un chargeur fixé au berceau et s'étendant dans l'espace de réception inférieur.

## Description

La présente invention concerne un agencement avant pour véhicule, en particulier destiné à être agencé à l'avant d'un véhicule. La présente invention concerne également un véhicule, notamment un véhicule automobile, comprenant un tel agencement avant.

Les véhicules utilitaires, notamment légers tels que des camionnettes, sont de plus en plus utilisés, en particulier en ville, par exemple pour assurer des livraisons de colis et/ou de marchandises.

Pour des raisons de fonctionnalités, de tels véhicules ont généralement des grandes dimensions, notamment à l'avant du véhicule.

Ainsi, de tels véhicules présentent souvent un porte-à-faux avant et un diamètre de braquage importants.

Les véhicules utilitaires connus sont donc généralement peu maniables, ce qui posent des difficultés en particulier dans les espaces urbains étroits.

Un des buts de l'invention est alors de pallier ces inconvénients, et en particulier de proposer un agencement avant pour véhicule permettant d'améliorer la maniabilité du véhicule.

A cet effet, l'invention a pour objet un agencement avant pour véhicule, notamment pour véhicule automobile, comprenant :
- un berceau comprenant deux longerons, chacun des longerons s'étendant selon une direction longitudinale entre une extrémité avant et une extrémité arrière, les deux longerons étant espacés l'un de l'autre selon une direction transversale perpendiculaire à la direction longitudinale,
- un support comprenant une face supérieure et une face inférieure opposées selon une direction verticale perpendiculaire à la direction longitudinale et à la direction transversale, la face inférieure du support s'étendant en regard du berceau,
- un espace de réception inférieur défini selon la direction verticale entre la face inférieure du support et le berceau, et
- un chargeur fixé au berceau et s'étendant dans l'espace de réception inférieur.

Suivant d'autres aspects avantageux de l'invention, l'agencement avant comprend une ou plusieurs des caractéristiques suivantes, prises isolément ou suivant toutes les combinaisons techniquement possibles :
- Le berceau comprend une traverse s'étendant entre les deux longerons selon la direction transversale, le chargeur étant fixé à ladite traverse.
- L'agencement avant comprend en outre une batterie fixée sur la face supérieure du support.
- L'agencement avant comprend en outre un compresseur de climatisation fixé sur la face supérieure du support.
- Le compresseur de climatisation comprend un support de filtration en forme de U.
- L'agencement avant comprend une électrovanne fixée à la face inférieure du support.
- L'agencement avant comprend un refroidisseur et/ou un élément de chauffage, le refroidisseur et/ou l'élément de chauffage étant fixé à la face inférieure du support.
- L'agencement avant comprend en outre au moins une conduite d'un système de climatisation et/ou de chauffage du véhicule, la conduite s'étendant au moins partiellement dans l'espace de réception inférieur.

L'invention concerne également un véhicule, notamment véhicule automobile, comprenant un agencement avant tel que décrit ci-dessus.

Suivant un autre aspect avantageux de l'invention, le véhicule comprend en outre un groupe motopropulseur agencé à l'arrière du véhicule.

L'invention apparaîtra plus clairement à la lecture de la description qui va suivre, donnée uniquement à titre d'exemple non limitatif, et faite en référence aux dessins dans lesquels :
La Figure 1 est une vue schématique d'un véhicule selon l'invention,
La Figure 2 est une vue schématique d'un agencement avant selon l'invention, l'agencement comprenant un berceau et un support portant des éléments,
Les Figures 3 et 4 sont des vues en section de l'agencement avant de la Figure 2,
La Figure 5 est une vue en perspective d'un exemple de support portant des éléments d'un agencement avant selon l'invention,
La Figure 6 est une vue en perspective d'un exemple de berceau d'un agencement avant selon l'invention, et
La Figure 7 est une vue en perspective d'un exemple de compresseur d'un agencement avant selon l'invention.

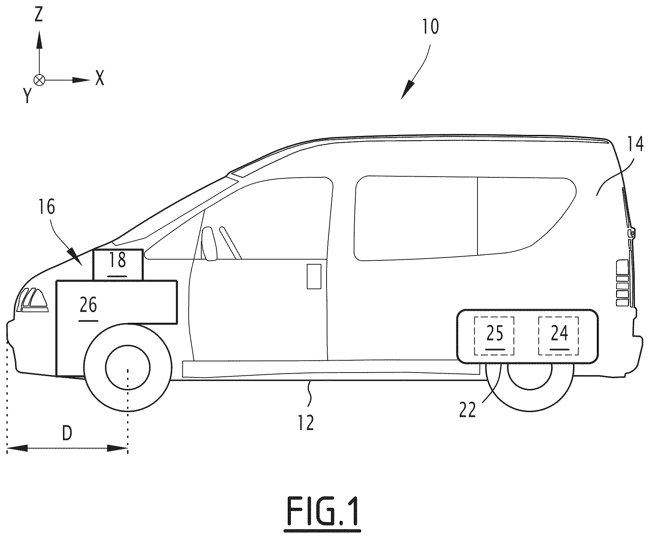

La Figure 1 montre un véhicule 10 selon l'invention.

Le véhicule 10 est par exemple un véhicule automobile, en particulier un véhicule utilitaire, notamment un véhicule utilitaire léger.

En particulier, le véhicule 10 est destiné au transport de marchandises, telles que des colis, et/ou de passagers.

Le véhicule 10 est par exemple une camionnette, comme illustré sur la Figure 1.

Le véhicule 10 est de préférence un véhicule électrique.

Pour des raisons de clarté, on définit un repère orthonormé XYZ comprenant une direction longitudinale X, une direction transversale Y et une direction verticale Z. La direction longitudinale X s'étend selon l'axe d'avancement du véhicule 10 et correspond à un axe avant-arrière du véhicule 10. La direction transversale Y est perpendiculaire à la direction longitudinale X et correspond à un axe gauche-droite du véhicule 10. La direction verticale Z est perpendiculaire à la direction longitudinale X et à la direction transversale Y et correspond à un axe bas-haut du véhicule 10.

Les termes « haut » et « bas » sont définis par rapport à la direction verticale Z correspondant à la hauteur du véhicule. Les termes « gauche », « droite », « avant » et « arrière » sont définis par rapport au sens de la direction d'avancement usuel du véhicule.

Par exemple, le véhicule 10 comprend un châssis 12, notamment de type « plateforme skateboard », et une carrosserie 14 fixée sur le châssis 12.

En particulier, le châssis 12 comprend par exemple une structure plate, ressemblant à une planche à roulettes, et destinée à supporter l'ensemble des composants mécaniques et électroniques essentiels à la propulsion et au contrôle du véhicule.

Le véhicule 10 présente avantageusement un porte-à-faux avant faible, correspondant à la distance D entre l'axe d'une roue avant 19 du véhicule 10 et une extrémité avant du véhicule 10. Par exemple, le porte-à-faux est compris entre 600 et 900 mm, et est par exemple sensiblement égal à 750 mm.

Le véhicule 10 présente avantageusement également un diamètre de braquage faible, correspondant en particulier au diamètre du cercle le plus petit que le véhicule peut décrire en tournant ses roues au maximum. Par exemple, le diamètre de braquage du véhicule 10 est compris entre 7 m et 12 m, et est par exemple sensiblement égal à 10 m.

Le véhicule 10 présente avantageusement également un empattement important, correspondant en particulier la distance entre les essieux avant et arrière. Par exemple, l'empattement du véhicule 10 est compris entre 3000 mm et 3500 mm.

De préférence, le véhicule 10, et en particulier la carrosserie 14, définit un compartiment 16, notamment à l'avant du véhicule 10.

Avantageusement, le véhicule 10 comprend un système de chauffage et/ou de refroidissement 18, en particulier destiné à chauffer et/ou refroidir l'habitacle du véhicule 10 et/ou d'autres éléments du véhicule 10, tel que des éléments haute-tension par exemple.

Le système de chauffage et/ou de refroidissement 18 est de préférence agencé dans le compartiment 16.

Le système de chauffage et/ou de refroidissement 18 est par exemple une pompe à chaleur.

De préférence, le véhicule 10 comprend un groupe motopropulseur 22 agencé à l'arrière du véhicule 10.

En particulier, le groupe motopropulseur 22 comprend par exemple un moteur 24, notamment électrique. Le moteur 24 est par exemple fixé au châssis 12, et en particulier à l'arrière du châssis 12.

De préférence, le groupe motopropulseur 22 comprend également une batterie de traction 25, en particulier agencé à proximité du moteur 24.

Le véhicule 10 comprend un agencement avant 26 selon l'invention.

Comme cela est visible sur la Figure 1, l'agencement avant 26 est en particulier agencé à l'avant du véhicule 10, et notamment dans le compartiment 16.

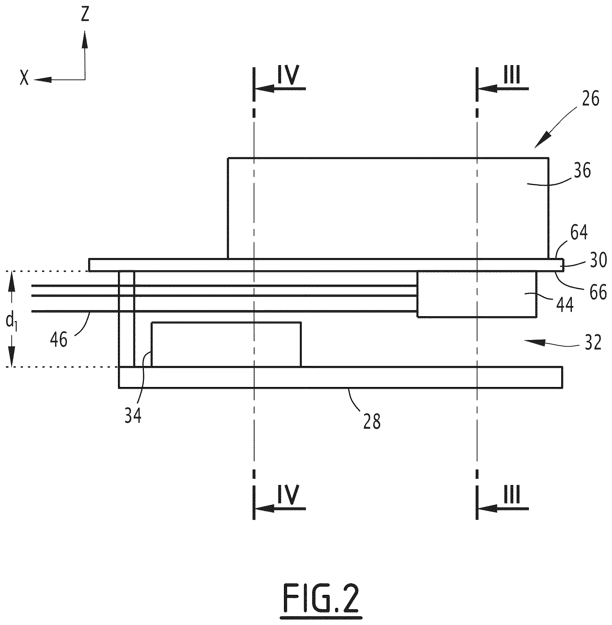

Comme illustré sur la Figure 2, l'agencement avant 26 comprend un berceau 28, un support 30, un espace de réception inférieur 32 et un chargeur 34.

De préférence, l'agencement avant 26 comprend, en outre, au moins un parmi une batterie 36, un compresseur de climatisation 38, une électrovanne 40, un refroidisseur 42, un élément de chauffage 44 et au moins une conduite 46 du système de chauffage et/ou de refroidissement 18 du véhicule 10.

Le berceau 28 comprend deux longerons 48A, 48B, et de préférence au moins une traverse 50.

Les deux longerons 48A, 48B s'étendent chacun selon la direction longitudinale X entre une extrémité avant 54A, 54B et une extrémité arrière 56A, 56B.

Les deux longerons 48A, 48B sont espacés l'un de l'autre selon la direction transversale Y.

En particulier, le berceau 28 comprend un longeron gauche 48A et un longeron droit 48B.

Chacun des deux longerons 48A, 48B est par exemple une poutre, notamment métallique, par exemple en acier ou en alliage d'aluminium.

Chacun des deux longerons 48A, 48B présente par exemple une section en boite fermée, notamment de forme sensiblement carrée, en particulier de côté compris entre 3 cm et 15 cm.

De préférence, la traverse 50 s'étend entre les deux longerons 48A, 48B selon la direction transversale Y.

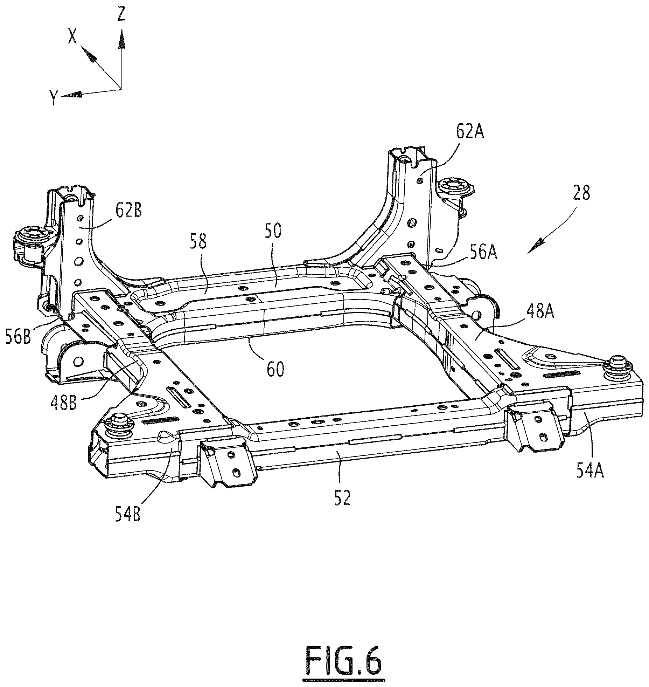

En particulier, dans le mode de réalisation particulier illustré sur la Figure 6, la traverse 50 s'étend, et notamment relie, les extrémités arrière 56A, 56B des deux longerons 48A, 48B.

La traverse 50 est par exemple fabriquée en métal, notamment en acier ou en alliage d'aluminium.

La traverse 50 présente par exemple une section en boite fermée, notamment de forme rectangulaire, par exemple de longueur (mesurée selon la direction X) comprise entre 7 cm et 20 cm.

En particulier, la traverse 50 comprend de préférence une face supérieure 58 et une face inférieure 60 opposées l'une de l'autre selon la direction verticale Z. Chacune des deux faces 58, 60 s'étend notamment dans un plan XY.

Chacune des deux faces 58, 60 s'étend notamment sensiblement dans un plan XY. Par exemple, la face supérieure 58 est orientée vers le haut et la face inférieure 60 vers le bas.

De manière avantageuse, le berceau 28 comprend également une traverse avant 52, en particulier pour renforcer ledit berceau 28.

Par exemple, dans le mode de réalisation particulier illustré sur la Figure 6, la traverse avant 52 s'étend, et notamment relie, les extrémités avant 54A, 54B des deux longerons 48A, 48B.

Dans un mode de réalisation particulier, le berceau 28 comprend deux pattes 62A, 62B de fixation d'éléments de suspension, et notamment une patte gauche 62A et une patte droite 62B.

Comme cela est visible sur la Figure 6, chacune des pattes 62A, 62B s'étend selon la direction verticale Z.

Par exemple, chacune des pattes 62A, 62B est fixée à l'extrémité arrière 56A, 56B du longeron 48A, 48B correspondant.

Par exemple, le berceau 28 est fixé au châssis 12, et notamment à l'avant de celui-ci.

En particulier, les extrémités arrière 56A, 56B des longerons 48A, 48B sont par exemple connectées à l'avant du châssis 12.

Alternativement, le berceau 28 est un berceau intégré, c'est-à-dire qu'il fait partie intégrante du châssis 12.

Le support 30 comprend une face supérieure 64 et une face inférieure 66 opposées selon la direction verticale Z.

Chacune des deux faces 64, 66 s'étend notamment sensiblement dans un plan XY. Par exemple, la face supérieure 64 est orientée vers le haut et la face inférieure 66 vers le bas.

Comme cela est visible sur les Figures 2 à 4, la face inférieure 66 du support 30 s'étend en regard du berceau 28, notamment selon la direction verticale Z.

Par exemple, la face inférieure 66 du support 30 s'étend parallèlement au berceau 28 et de préférence à distance de celui-ci selon la direction verticale Z.

En particulier, la face inférieure 66 du support 30 est à une distance d1 du berceau 28, et par exemple de la face supérieure 58 de la traverse 50, comprise entre 2 cm et 100 cm.

Par exemple, le support 30 comprend, et de préférence est formé par, une tôle 68 définissant la face supérieure 64 et la face inférieure 66.

La tôle 68 est par exemple pliée et/ou emboutie.

Par exemple, la tôle 68 est fabriquée en acier.

La tôle 68 présente par exemple une épaisseur comprise entre 1 mm et 2 mm, voire entre 1.5 mm et 1.75 mm.

La tôle 68 présente par exemple une section, notamment prise dans le plan XZ, en forme d'oméga inversé.

En particulier, la tôle 68 définit deux bords transversaux 70 et reliés entre eux par une portion centrale 72.

Chacun des bords transversaux 70 s'étend notamment selon la direction transversale Y.

Par exemple, chacun des bords transversaux 70 présente une section en forme de U inversé, notamment orienté vers le bas.

La portion centrale 72 s'étend en particulier dans un plan XY entre les deux bords transversaux 70.

Avantageusement, le support 30 comprend des creux et/ou des bossages, en particulier ménagés au niveau de la portion centrale 72 et/ou des bords transversaux 70 de la tôle 68.

Le support 30 est par exemple fixé au châssis 12, et notamment à l'avant de celui-ci.

Le support 30 présente par exemple une longueur, mesurée selon la direction transversale Y, comprise entre 650 mm et 850 mm, voire entre 730 mm et 780 mm.

Le support 30 présente par exemple une largeur, mesurée selon la direction longitudinale X, comprise entre 200 mm et 350 mm, voire entre 250 mm et 300 mm.

L'espace de réception inférieur 32 est défini selon la direction verticale Z entre la face inférieure 66 du support 30 et le berceau 28.

En particulier, l'espace de réception inférieur 32 correspond au volume défini entre la face inférieure 66 du support 30 et le berceau 28, notamment de hauteur d1.

Le chargeur 34 est fixé au berceau 28.

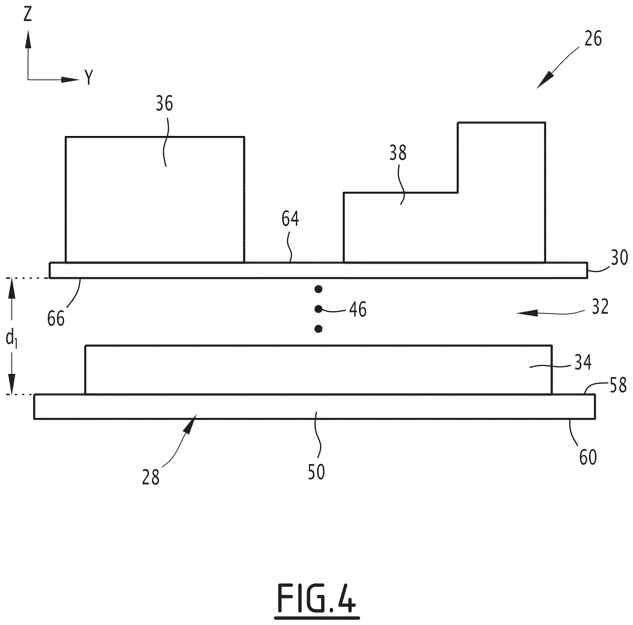

Comme cela est visible sur les Figures 2 et 4, le chargeur 34 s'étend dans l'espace de réception inférieur 32.

Plus précisément, dans un mode de réalisation particulier, le chargeur 34 est fixé à la traverse 50, et notamment à la face supérieure 58 de la traverse 50.

Le chargeur 34 est par exemple fixé au berceau 28 par des vis.

Le chargeur 34 présente par exemple une forme de pavé droit.

Le chargeur 34 est par exemple destiné à convertir l'énergie électrique provenant d'une source externe, comme une prise murale ou une borne de recharge, en énergie stockée dans la batterie de traction 25.

De préférence, la batterie 36 est fixée sur la face supérieure 64 du support 30, et notamment sur la portion centrale 72 de la tôle 68, par exemple par des vis.

La batterie 36 est par exemple fixée sur la droite de la face supérieure 64 du support 30.

La batterie 36 comprend de préférence une pièce de protection 74, en particulier entourant la batterie 36.

La pièce de protection 74 est avantageusement configurée pour protéger la batterie 36 en cas d'accident, et en particulier de collision avant.

La batterie 36 est par exemple une batterie de servitude, notamment au plomb.

La batterie 36 présente notamment une tension à ses bornes de l'ordre de 12 Volts.

De préférence, le compresseur de climatisation 38 est fixé sur la face supérieure 64 du support 30, et notamment sur la portion centrale 72 de la tôle 68, par exemple par des vis.

Le compresseur de climatisation 38 est par exemple fixé sur la gauche de la face supérieure 64 du support 30, en particulier à côté de la batterie 36.

Le compresseur de climatisation 38 comprend en particulier un corps principal 76.

Le compresseur de climatisation 38, et notamment son corps principal 76, est de préférence un compresseur électrique de climatisation alimenté en haute tension, par exemple de l'ordre de 800 V, et notamment sans courroie.

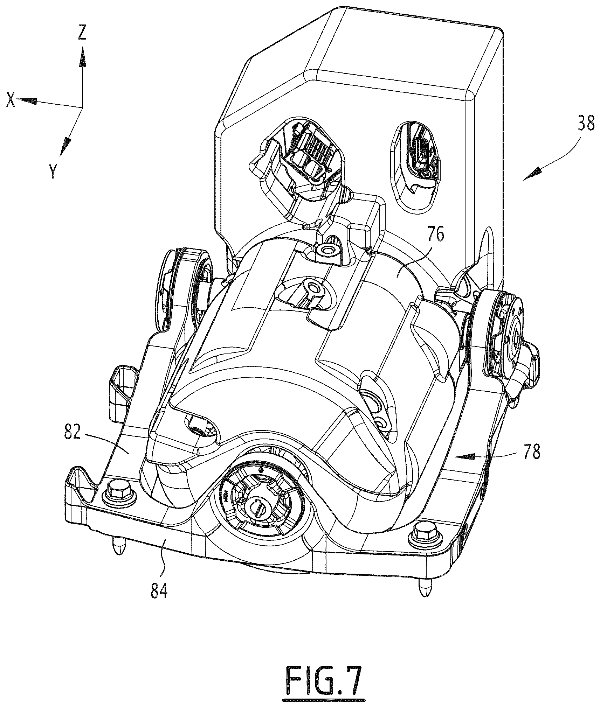

Comme cela est visible sur la Figure 7, le compresseur de climatisation 38 comprend en outre avantageusement un support de filtration 78, et notamment un moyen de filtration.

Le support de filtration 78 assure de préférence la fixation du compresseur de climatisation 38 sur la face supérieure 64 du support 30, et plus précisément dans un des creux ménagés sur le support 30, et encore plus précisément ménagés sur la portion centrale 72 de la tôle 68.

En particulier, le support de filtration 78 est fixé entre le corps principal 76 et le support 30.

Le support de filtration 78 présente par exemple une forme de U, notamment dans le plan XY.

Plus particulièrement, le support de filtration 78 comprend deux branches transversales 82 s'étendant chacune selon la direction transversale Y et reliées entre elles par une branche longitudinale 84, s'étendant selon la direction longitudinale X.

Le support de filtration 78 est par exemple fabriqué en alliage d'aluminium, et notamment par fonderie.

Le moyen de filtration est avantageusement agencé entre le support de filtration 78 et le corps principal 76, en particulier de sorte à ne pas transmettre de vibrations issues du corps principal 76 au support 30.

Le moyen de filtration est de préférence configuré de sorte à assurer une filtration pendulée, notamment en son centre de gravité.

De préférence, le refroidisseur 42 est fixé sur la face inférieure 66 du support 30, par exemple par des vis.

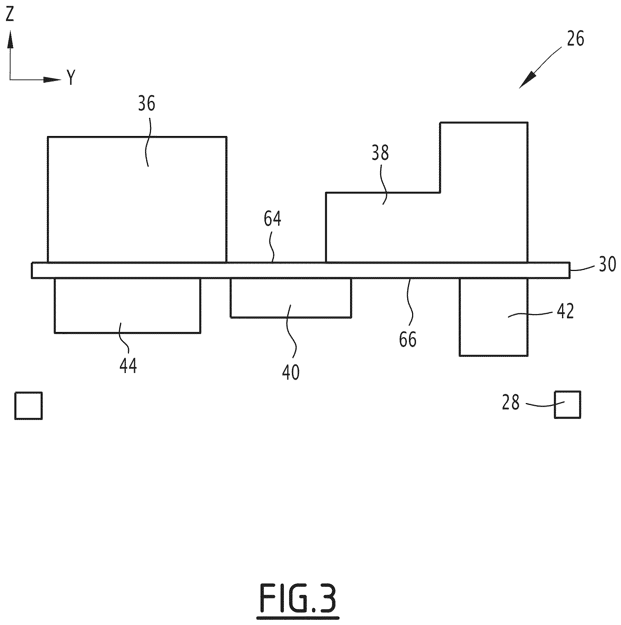

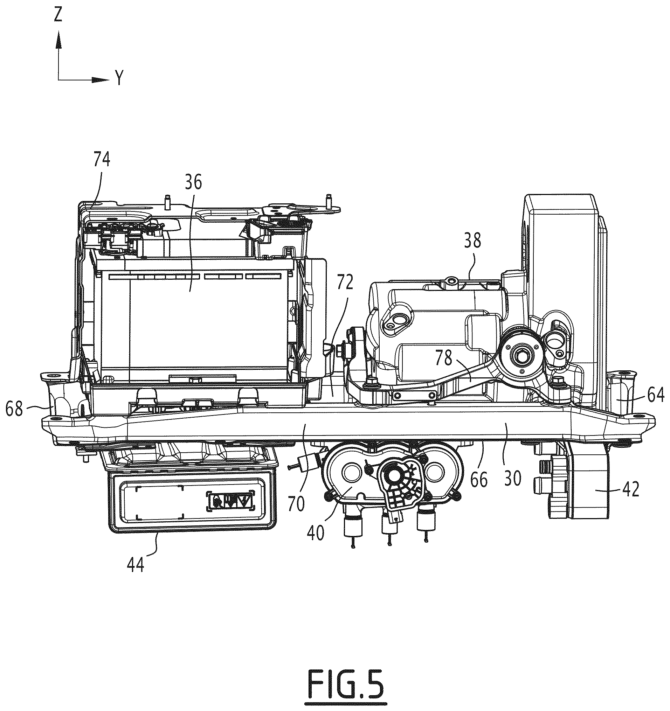

Le refroidisseur 42 est par exemple fixé sur la gauche de la face inférieure 66 du support 30, comme cela est visible sur les Figures 3 et 5.

Le refroidisseur 42 est par exemple un composant du système de chauffage et/ou de refroidissement 18.

Par exemple, le refroidisseur 42 est plus communément connu sous le terme « Chiller ».

Plus particulièrement, le refroidisseur 42 est configuré pour assurer un échange thermique entre un liquide, notamment de l'eau, et un gaz, notamment de l'air, utilisés dans le système de chauffage et/ou de refroidissement 18.

De préférence, l'élément de chauffage 44 est fixé sur la face inférieure 66 du support 30, par exemple par des vis.

L'élément de chauffage 44 est par exemple fixé sur la droite de la face inférieure 66 du support 30, comme cela est visible sur les Figures 3 et 5.

L'élément de chauffage 44 est par exemple un composant du système de chauffage et/ou de refroidissement 18.

Par exemple, l'élément de chauffage 44 est notamment du type HCVH (abréviation anglaise de « High Voltage Central Heating » se traduisant en français par Chauffage central haute tension).

Plus particulièrement, l'élément de chauffage 44 est configuré pour chauffer le liquide, notamment de l'eau, du système de chauffage et/ou de refroidissement 18, par exemple par le biais d'une résistance chauffante.

L'électrovanne 40 est fixée sur la face inférieure 66 du support 30, par exemple par des vis.

L'électrovanne 40 est par exemple fixée au milieu de la face inférieure 66 du support 30, notamment entre le refroidisseur 42 et l'élément de chauffage 44, comme cela est visible sur les Figures 3 et 5.

L'électrovanne 40 est par exemple un composant du système de chauffage et/ou de refroidissement 18.

Par exemple, l'électrovanne 40 est munie de sept voies.

Plus particulièrement, l'électrovanne 40 est configurée pour assurer une distribution du liquide de refroidissement et/ou de chauffage, notamment de l'eau, à différents organes, par exemple le refroidissement de la batterie de traction 25 et/ou du moteur électrique 24 et/ou de l'habitacle du véhicule 10.

Avantageusement, l'agencement avant 26 comprend une pluralité de conduites 46 du système de chauffage et/ou de refroidissement 18.

De préférence, au moins l'une, et avantageusement chacune, des conduites 46 s'étend au moins partiellement dans l'espace de réception inférieur 32.

En particulier, chacune des conduites 46 est configurée pour assurer un transport du liquide de refroidissement et/ou de chauffage dans le véhicule 10, notamment vers les différents organes, tels que la batterie de traction 25 et/ou le moteur électrique 24 et/ou l'habitacle du véhicule 10.

Les conduites 46 sont par exemple connectées à l'électrovanne 40 et/ou le refroidisseur 42 et/ou l'élément de chauffage 44.

Le système de chauffage et/ou de refroidissement 18 du véhicule 10 comprend notamment d'autres composants, tels qu'un bocal de dégazage et/ou au moins une pompe par exemple.

Un tel agencement avant 26 est particulièrement avantageux.

En particulier, un tel agencement avant 26 présente l'avantage d'être compact, notamment grâce au support 30.

En outre, la disposition des différents composants 34, 36, 38, 40, 42, 44, 46 sur le support 30, sur le berceau 28, et notamment dans l'espace de réception 32, autorise un arrangement compact de ces composants.

Par ailleurs, la disposition du groupe motopropulseur 22 à l'arrière du véhicule 10 rend l'avant du véhicule 10 encore plus compact.

Cette compacité de l'avant du véhicule 10 permet ainsi de réduire le porte-à-faux avant et le diamètre de braquage, ce qui améliore ainsi la maniabilité du véhicule 10.

En outre, grâce à l'agencement avant 26 comprenant l'ensemble des composants arrangés de manière verticale, les fonctionnalités du véhicule 10 ne sont pas réduites et en particulier, l'empattement du véhicule 10 n'est pas impacté.

## Revendications

1. Agencement avant (26) pour véhicule (10), notamment pour véhicule automobile, comprenant :
- un berceau (28) comprenant deux longerons (48A, 48B), chacun des longerons (48A, 48B) s'étendant selon une direction longitudinale (X) entre une extrémité avant (54A, 54B) et une extrémité arrière (56A, 56B), les deux longerons (48A, 48B) étant espacés l'un de l'autre selon une direction transversale (Y) perpendiculaire à la direction longitudinale (X),
- un support (30) comprenant une face supérieure (64) et une face inférieure (66) opposées selon une direction verticale (Z) perpendiculaire à la direction longitudinale (X) et à la direction transversale (Y), la face inférieure (66) du support (30) s'étendant en regard du berceau (28),
- un espace de réception (32) inférieur défini selon la direction verticale (Z) entre la face inférieure (66) du support (30) et le berceau (28), et
- un chargeur (34) fixé au berceau (28) et s'étendant dans l'espace de réception inférieur (32).

2. Agencement avant (26) selon la revendication 1, dans lequel le berceau (28) comprend une traverse (50) s'étendant entre les deux longerons (48A, 48B) selon la direction transversale (Y), le chargeur (34) étant fixé à ladite traverse (50).

3. Agencement avant (26) selon la revendication 1 ou 2, comprenant en outre une batterie (36) fixée sur la face supérieure (64) du support (30).

4. Agencement avant (26) selon l'une quelconque des revendications précédentes, comprenant en outre un compresseur de climatisation (38) fixé sur la face supérieure (64) du support (30).

5. Agencement avant (26) selon la revendication 4, dans lequel le compresseur de climatisation (38) comprend un support de filtration (78) en forme de U.

6. Agencement avant (26) selon l'une quelconque des revendications précédentes, comprenant une électrovanne (40) fixée à la face inférieure (66) du support (30).

7. Agencement avant (26) selon l'une quelconque des revendications précédentes, comprenant un refroidisseur (42) et/ou un élément de chauffage (44), le refroidisseur (42) et/ou l'élément de chauffage (44) étant fixé à la face inférieure (66) du support (30).

8. Agencement avant (26) selon l'une quelconque des revendications précédentes, comprenant en outre au moins une conduite (46) d'un système de climatisation et/ou de chauffage (18) du véhicule (10), la conduite (46) s'étendant au moins partiellement dans l'espace de réception inférieur (32).

9. Véhicule (10), notamment véhicule automobile, comprenant un agencement avant (26) selon l'une quelconque des revendications précédentes.

10. Véhicule (10) selon la revendication 9, comprenant en outre un groupe motopropulseur (22) agencé à l'arrière du véhicule (10).
